# EUROPÄISCHE PATENTSCHRIFT

(11) **EP 1 513 644 B1**
(45) Veröffentlichungstag und Bekanntmachung des Hinweises auf die Patenterteilung: **25.04.2007**
(21) Anmeldenummer: 03712079.7
(22) Anmeldetag: 22.03.2003
(51) Int. Cl.: B23D 29/02, B26B 17/02

(54) **BOLZENSCHNEIDER ODER ZANGE ZUM DURCHTRENNEN VON STABFÖRMIGEN MATERIALIEN, INSBESONDERE BESCHLÄGEN**
BOLT CUTTERS OR PLIERS FOR CUTTING THROUGH ROD-SHAPED MATERIALS, ESPECIALLY FITTINGS
COUPE-BOULONS OU PINCE SERVANT A SECTIONNER DES MATERIAUX EN FORME DE BARRES, NOTAMMENT DES ARMATURES

(30) Priorität: 19.06.2002 DE 20209553 U
(43) Veröffentlichungstag der Anmeldung: 16.03.2005
(73) Patentinhaber: SIEGENIA-AUBI KG, 57234 Wilnsdorf (DE)
(72) Erfinder: KLUGE, Christian, 57555 Mudersbach (DE); KRINGE, Jürgen, 57250 Netphen (DE); MAYENSCHEIN, Ralf, 57080 Siegen (DE)
(86) Internationale Anmeldenummer: PCT/EP2003/003012
(87) Internationale Veröffentlichungsnummer: WO 2004/000495

(56) Entgegenhaltungen:
- EP-A- 0 450 363
- DE-A- 19 933 890
- GB-A- 382 067

## Beschreibung

Die Erfindung betrifft einen Bolzenschneider oder Zange zum Durchtrennen von stabförmigen Materialien, insbesondere Beschlägen. Mit den Beschlägen sind dabei Treibstangenbeschläge gemeint, die aus zwei parallel zueinander verlaufenden, einen flachrechteckigen Querschnitt aufweisenden Stangen oder profilierten Schienen bestehen. Üblicherweise ist eine erste Stange bzw. Schiene als Stulpschiene ausgebildet, welche - im eingebauten Zustand - eine an der Falzfläche des Flügels angebrachte Beschlagnut abdeckt und eine unter der Stulpschiene längsverschieblich an dieser gelagerte Treibstange abdeckt.

Um verschiedene Flügelabmessungen mit den Treibstangenbeschlägen versehen zu können sind einige Beschlagteile an ihren Enden über eine Teillänge mit Formschlusselementen z.B. in Form von Feinverzahnungen versehen, welche sich mit Kupplungsgliedern von in der Länge fixen Beschlagteilen koppeln lassen. Die richtigen Abmessungen der Treibstangenbeschläge werden ermittelt und die ablängbaren Beschlagteile entsprechend gekürzt.

Im einfachsten Fall werden zum Kürzen der Beschlagteile Sägen oder Bolzenschneider wie etwa aus der US 5,898,998 bekannt bzw. Zangen oder auch Tischscheren verwendet. Daneben werden auch hydraulisch oder pneumatisch angetriebene Trennwerkzeuge verwendet, wenn die Anzahl der abzulängenden Beschlagteile groß genug ist. Hierzu wird insbesondere auf die EP 0 450 363 B1 und die DE 199 33 890 A1 hingewiesen. Aus den genannten Druckschriften geht überdies hervor, dass in einigen Fällen ein versetzter Schnitt der parallel verlaufenden Treibstange und der Stulpschiene notwendig ist. Hierzu sind in den Trennwerkzeugen getrennte Messer vorgesehen, die in Richtung der Längsachsen der Stangen - bzw. Treibstange und Stulpschiene - im Abstand von einander versetzt angeordnet sind. Dadurch werden diese so versetzt abgelängt, dass bei der Längsverschiebung der Treibstange diese in keiner Stellung über die Stulpschiene vorsteht.

Die vorgenannten Einrichtungen haben sich in der Praxis bereits bewährt, sind aber zum einen kostspielig und setzen zum anderen spezielle Antriebsmittel wie Kompressoren voraus, die nicht immer vorhanden sind.

Daher besteht Bedarf an einer Vorrichtung, mit der zum einen eine schnelle und kostengünstige Trennung möglich ist und die zum anderen einen versetzten Schnitt der Stangen oder Stäbe zuläßt.

Die Lösung dieser Aufgabe gelingt durch einen Bolzenschneider bzw. eine Zange mit den Merkmalen des kennzeichnenden Teils.

Der Bolzenschneider lässt sich vergleichsweise kostengünstig herstellen und kann handbetätigt unter Verzicht auf externe Energiequellen betrieben werden. Durch Ausrichten einer der Schneidbackenpaare wird gleichzeitig die Ausrichtung des anderen Schneidbackenpaares bewirkt, so dass der notwendige Abstand der zuverlässig eingehalten wird. Dabei kann ein gewöhnlicher Bolzenschneider sehr einfach umgerüstet werden, in dem die vorhandenen Schneidbacken entnommen werden und gegen die Schneidbackenpaare ausgetauscht werden.

Dadurch, dass die Schneidbacken jeweils in Richtung der Längsachse der Materialien Ausklinkungen oder Freimachungen zum Durchtritt der Materialien aufweisen, lassen sich die Materialien an der jeweils anderen Schneidbacke vorbei schieben. So kann der Streifen des Materials länger sein als der Abstand der Schneidbackenpaare zueinander.

Zur besseren Handhabung ist ferner vorgesehen, dass die Schneidbacken bezüglich der Klauen symmetrisch angeordnet sind. Dies ist auch von Vorteil, wenn ein vorhandener Bolzenschneider umgerüstet wird. Dabei ist das ursprüngliche Schneidbackenpaar in der Regel zwischen zwei Augen der Klauen aufgenommen während zwecks symmetrischer Belastung die beiden Schneidbackenpaare jeweils außen an einem der Augen angreifen.

Zur Steigerung der Stabilität ist schließlich noch vorgesehen, dass an einer Schwenklagerung der Schneidbacken an dem Verbindungssteg die Schneidbackenpaare über Distanzhülsen beabstandet miteinander verbunden sind.

Weitere Vorteile ergeben sich aus den Figuren. Es zeigen:
- Fig. 1: eine perspektivische Darstellung des Bolzenschneiders,
- Fig. 2: den Bolzenschneider in einer Ansicht von vorn und
- Fig. 3: eine Draufsicht der Schneidbacken des Bolzenschneiders nach den Fig. 1 und 2.

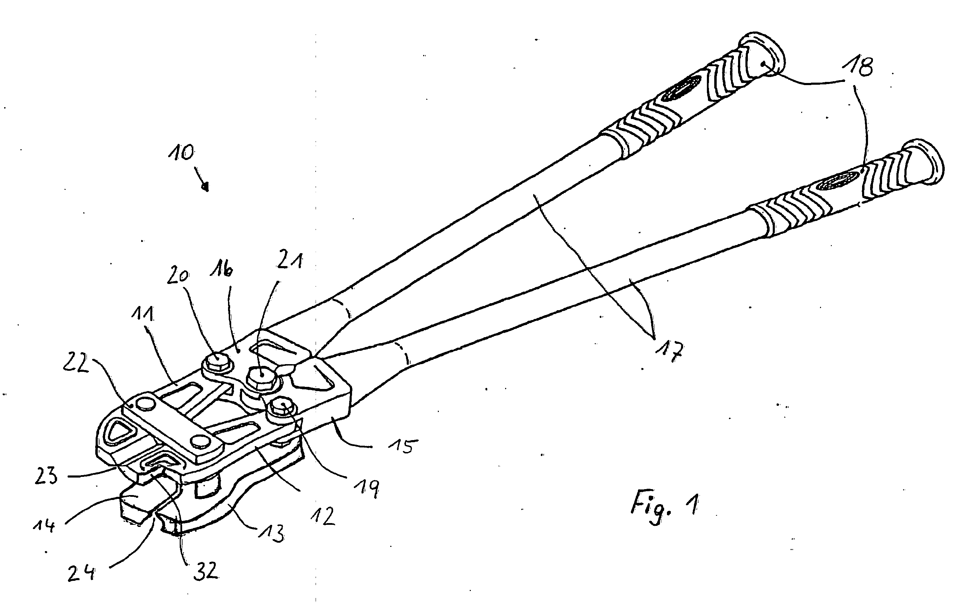

Entsprechend der Fig. 1 weist der Bolzenschneider 10 zwei Schneidbackenpaare mit den Schneidbackenpaaren 11, 12; 13, 14 auf, welche über Klauen 15, 16 und Verbindungsstangen 17 mit Handgriffen 18 in Verbindung stehen. Die Klauen 15, 16 sind über Schwenklagerungen 19, 20 an den Schneidbacken 11, 12; 13, 14 angelenkt und über eine Schwenklagerung 21 aneinander schwenkbeweglich gekoppelt. Die Schneidbacken 11, 12; 13, 14 sind ferner über einen Verbindungssteg 22 aneinander gekoppelt. Bei einer Bewegung der Griffe 18 werden die Schneidbacken 11, 12; 13, 14 dementsprechend um die als Schwenklagerung ausgebildete Kopplung des Verbindungsstegs 22 verschwenkt und geben den Schneidspalt 23, 24 frei bzw. schließen diese zum Durchtrennen des Materials.

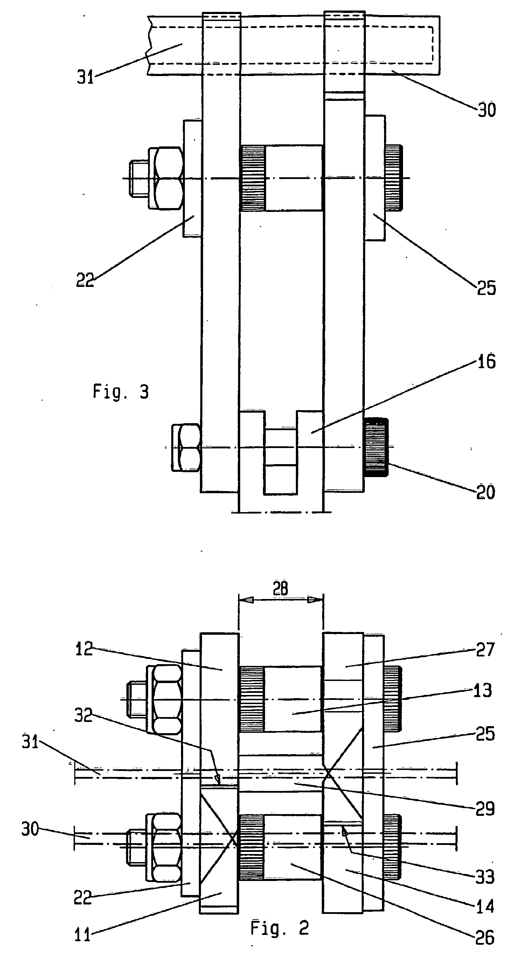

Wie aus der Fig. 2 hervorgeht liegt dem Verbindungssteg 22 ein zweiter Verbindungssteg 25 gegenüber. Hieraus wird auch deutlich, dass die Schneidbackenpaare 11, 12; 13, 14 entlang der Schwenklagerung an dem Verbindungssteg 22 durch Buchsen 26, 27 um ein Maß 28 parallel voneinander beabstandet sind. Wie aus der Fig. 3 hervorgeht, entspricht dieses Maß 28 dem Abstand, den die Klaue 16 entlang der Schwenklagerung 20 aufweist. Ferner ist noch vorgesehen, dass die Verbindungsstege 22, 25 über einen Stift 29 miteinander verbunden sind.

Wie in der Fig. 2 angedeutet, kann über das Zusammenwirken der um das Maß 28 versetzt zueinander angeordneten Schneidbackenpaare 11, 12; 13, 14 beispielsweise eine Stulpschiene 30 dem Schneidbackenpaar 13, 14 und eine Treibstange 31 dem Schneidbackenpaar bestehend aus den Schneidbacken 11, 12 zugeordnet werden. Diese werden entsprechend dem Maß 28 versetzt zueinander abgelenkt, wobei - betrachtet von der linken Zeichnungsseite her - die Stulpschiene 30 über die Treibstange 31 übersteht.

Um das Durchtreten der über das gewünschte Maß hinausgehenden Abschnitte bzw. der nicht abzulängenden Bereiche von Stulpschiene 30 und 31 zu gewährleisten, ist die Schneidbacke 12 mit einer Ausklinkung 32 bzw. einer entsprechenden Freimachung versehen. Auch die Schneidbacke 14 weist eine Ausklinkung 33 auf, die zum Durchtritt der Treibstange 31 dient. Dadurch können die jeweils nicht benötigten oder zu bearbeitenden in Richtung ihrer Längsachse an den Schneidbacken 11, 12, 13, 14 vorbeigeführt werden.

Wie bereits vorstehend ausgeführt, sind die Schneidbackenpaare 11, 12; 13, 14 entsprechend dem Maß der Klaue 16 und zusätzlich über die Buchsen oder Hülsen 26, 27 im Abstand voneinander angebracht. Dies erfolgt symmetrisch zu den Klauen 15, 16 um ggf. resultierende Kräfte auf die Lagerung oder die Griffe 18 zu vermeiden.

Es ist leicht verständlich, dass die Anordnung der Schneidbacken 11, 12 bzw. 13, 14 unabhängig von der Art des Antriebsmechanismus des Bolzenschneiders 10 möglich ist, dass also auch andere Mechaniken zum Bewegen der Schneidbackenpaare 11, 12; 13, 14 vorgesehen werden können.

Durch die beschriebene Anordnung lässt sich ein Treibstangenbeschlag mit einer Stulpschiene 30 bzw. einer Treibstange 31 in einfacher Art und Weise mit dem zuvor beschriebenen Stufenschnitt versehen. Dabei ist das verwendete Werkzeug wesentlich kostengünstiger als bislang bekannte Vorrichtungen hierzu. Durch die getroffene Ausgestaltung kann darüber hinaus ein bereits vorhandener Bolzenschneider unter Austausch der Schneidbacken umgerüstet werden.

### Bezugszeichenliste

- 10: Bolzenschneider
- 11: Schneidbacke
- 12: Schneidbacke
- 13: Schneidbacke
- 14: Schneidbacke
- 15: Klaue
- 16: Klaue
- 17: Verbindungsstange
- 18: Griff
- 19: Schwenklagerung
- 20: Schwenklagerung
- 21: Schwenklagerung
- 22: Verbindungssteg
- 23: Schneidspalt
- 24: Schneidspalt
- 25: Verbindungssteg
- 26: Buchse
- 27: Buchse
- 28: Maß
- 29: Stift
- 30: Stulpschiene
- 31: Treibstange
- 32: Ausklinkung
- 33: Ausklinkung

## Patentansprüche

1. Bolzenschneider oder Zange zum Durchtrennen von stabförmigen Materialien, insbesondere Beschlägen, mit zumindest zwei parallel verlaufende Stäbe oder Schienen (30, 31),
bestehend aus
Schneidbacken (11, 12; 13, 14),
zwei Klauen (15, 16), die aneinander und den Schneidbacken (11, 12; 13, 14) zugeordnet sind und an denen Griffe (18) über Verbindungsstangen (17) angebracht sind
und zumindest einem Verbindungssteg (25), der die Schneidbacken (11, 12; 13, 14) verbindet,
**dadurch gekennzeichnet**,
das zwei Schneidbackenpaare (11, 12; 13,14) vorgesehen sind, die mit Abstand (28) von einander angeordnet sind.

2. Bolzenschneider oder Zange nach Anspruch 1, **dadurch gekennzeichnet, dass** die Schneidbacken (11, 12; 13,14) jeweils in Richtung der Längsachse der Materialien Ausklinkungen (32, 33) oder Freimachungen zum Durchtritt der Materialien aufweisen.

3. Bolzenschneider oder Zange nach Anspruch 1 oder 2, **dadurch gekennzeichnet, dass** die Schneidbacken (11, 12; 13, 14)) bezüglich der Klauen (15, 16) symmetrisch angeordnet sind.

4. Bolzenschneider oder Zange nach einem der Ansprüche 1 bis 3, **dadurch gekennzeichnet, dass** an einer Schwenklagerung der Schneidbacken (11, 12; 13, 14) an dem Verbindungssteg (22, 25) die Schneidbackenpaare (11, 12; 13, 14) über Buchsen (26, 27) beabstandet miteinander verbunden sind.

## Claims

1. Bolt cutters or pliers for cutting through rod-shaped materials, especially fittings, with at least two rods or rails (30, 31) running parallel, comprising
cutting jaws (11, 12; 13, 14),
two claws (15, 16) which are assigned to each other and to the cutting jaws (11, 12; 13, 14) and to which handles (18) are attached via connecting poles (17),
and at least one connecting web (25) which connects the cutting jaws (11, 12; 13, 14), **characterized in that** two pairs of cutting jaws (11, 12; 13, 14) which are arranged at a distance (28) from one another are provided.

2. Bolt cutters or pliers according to Claim 1, **characterized in that** the cutting jaws (11, 12; 13, 14) have notches (32, 33) or clearances, in each case in the direction of the longitudinal axis of the materials, for passing through the materials.

3. Bolt cutters or pliers according to Claim 1 or 2, **characterized in that** the cutting jaws (11, 12; 13, 14) are arranged symmetrically with respect to the claws (15, 16).

4. Bolt cutters or pliers according to one of Claims 1 to 3, **characterized in that**, on a swivel mounting of the cutting jaws (11, 12; 13, 14) on the connecting web (22, 25), the pairs of cutting jaws (11, 12; 13, 14) are connected to one another at a distance via bushings (26, 27).

## Revendications

1. Coupe-boulon ou pince servant à sectionner des matériaux en forme de barres, notamment des armatures, comprenant au moins deux tiges ou barres parallèles (30, 31),
constitué de
lames de coupe (11, 12; 13, 14)
deux mâchoires (15, 16) associées l'une à l'autre et aux lames de coupe (11, 12; 13, 14), et sur lesquelles sont agencées des poignées (18) par l'intermédiaire de bras (17),
et au moins une patte de liaison (25) qui relie les lames de coupe (11, 12; 13, 14),
**caractérisé en ce que**
deux paires de lames de coupe (11, 12; 13, 14) sont prévues, qui sont disposées à distance (28) l'une de l'autre.

2. Coupe-boulon ou pince selon la revendication 1, **caractérisé en ce que** les lames de coupe (11, 12; 13, 14) présentent chacun des évidements (32, 33) ou des dégagements pour le passage des matériaux, dans la direction de l'axe longitudinal des matériaux.

3. Coupe-boulon ou pince selon la revendication 1 ou 2, **caractérisé en ce que** les lames de coupe (11, 12; 13, 14) sont disposées symétriquement par rapport aux mâchoires (15, 16).

4. Coupe-boulon ou pince selon l'une des revendications 1 à 3, **caractérisé en ce que** les paires de lames de coupe (11, 12; 13, 14) sont assemblées à distance l'une de l'autre par l'intermédiaire de douilles (26, 27), là où les lames de coupe (11, 12; 13, 14) pivotent sur la patte de liaison (22, 25).
